# EUROPÄISCHE PATENTSCHRIFT

(11) **EP 1 914 612 B1**
(45) Veröffentlichungstag und Bekanntmachung des Hinweises auf die Patenterteilung: **14.12.2011**
(21) Anmeldenummer: 07013856.5
(22) Anmeldetag: 14.07.2007
(51) Int. Cl.: G05B 19/408, G05B 19/404

(54) **Verfahren zum Positionieren von Achsen in Werkzeugmaschinen**
Method for positioning axes in machine tools
Procédé destiné au positionnement d'axes dans des machines-outils

(30) Priorität: 14.10.2006 DE 102006048684
(43) Veröffentlichungstag der Anmeldung: 23.04.2008
(73) Patentinhaber: Dr. Johannes Heidenhain GmbH, 83301 Traunreut (DE)
(72) Erfinder: Zacek, Johann, 83552 Evenhausen (DE); Buchner, Ludwig, 83361 Kienberg (DE)

(56) Entgegenhaltungen:
- EP-A1- 0 289 836
- EP-A2- 0 545 658
- EP-A2- 1 189 121

## Beschreibung

Die Erfindung betrifft ein Verfahren zum Positionieren von Maschinenachsen in Werkzeugmaschinen, das eine sehr genaue Positionierung der Maschinenachsen gewährleistet.

An moderne Werkzeugmaschinen werden immer größere Anforderungen hinsichtlich der Bearbeitungsgenauigkeit gestellt. Es muss daher bei der Ansteuerung solcher Werkzeugmaschinen mit Numerischen Steuerungen alles getan werden, um Bearbeitungsfehler zu vermeiden.

Reproduzierbare Abweichungen des fertig bearbeiteten Werkstückes von der gewünschten Werkstückform haben ihre Ursache oft in der Kinematik der Werkzeugmaschine, die immer gewisse Fehler aufweist. Um solche reproduzierbaren, statischen Fehler zu beseitigen, ist es aus der EP 1189121 A2 bekannt, an einer Anzahl von Arbeitspunkten in einem Arbeitsraum den Positionierungsfehler eines Werkzeuges zu messen und in einer mehrdimensionalen Kompensationstabelle einzutragen. Die in einem Bearbeitungsprogramm in Werkstückkoordinaten vorgegebenen Sollpositionen des Werkzeugs werden dann mit den bei Bedarf interpolierten Kompensationswerten aus der Kompensationstabelle beaufschlagt und erst dann der Numerischen Steuerung zum Positionieren des Werkzeugs übergeben. Bei dieser Methode wird aber nicht berücksichtigt, dass der statische Fehler einer Werkzeugmaschine abhängig sein kann von der Stellung von bestimmten Maschinenachsen wie z.B. Drehachsen.

So erläutert die US 5357450, dass lineare Achsen und deren Fehler in Werkzeugmaschinen noch vergleichsweise einfach zu vermessen und einzustellen sind, während die Fehler durch Dreh- oder Schwenkachsen einen erheblich höheren Aufwand zur Vermessung und Einstellung verursachen. Es wird in diesem Stand der Technik ein automatisiertes Verfahren beschrieben, mit dem solche Fehler gemessen und in Anweisungen für Wartungsarbeiten umgesetzt werden können.

Einen anderen Weg geht die EP 289836 B1, die eine vergleichsweise aufwändige Methode beschreibt, die Fehler in einer Robotermechanik zu analysieren und mit mathematischen Methoden bei der Positionierung des Roboters zu berücksichtigen.

Es ist außerdem bereits üblich, die Kinematik einer Werkzeugmaschine mittels einer Kinematiktabelle zu beschreiben. Anhand einer solchen Kinematiktabelle kann eine Numerische Steuerung die in Werkstückkoordinaten vorgegebenen Sollpositionen eines Werkzeuges in Sollpositionen der Maschinenachsen umrechnen. In dieser Kinematiktabelle ist die Werkzeugmaschine hinsichtlich ihrer Geometrie und ihrer Maschinenachsen vollständig beschrieben. In der Kinematiktabelle sind Transformationen der Koordinaten in mehreren, die Kinematik der Werkzeugmaschine beschreibenden Einträgen angegeben, indem pro Eintrag jeweils eine Achsrichtung und ein zugehöriger Transformationsbetrag angegeben ist. Die zur Verfügung stehenden Maschinenachsen sind an den entsprechenden Stellen ebenfalls in der Kinematiktabelle angegeben. Ein erläutertes Beispiel für eine solche Kinematiktabelle wird weiter unten angegeben.

Durch die Umrechnung der in Werkstückkoordinaten angegeben Sollposition des Werkzeugs (bzw. dessen Tool Center Points, TCP und dessen Orientierung) in Achskoordinaten bzw. Achspositionen der Werkzeugmaschine kann ein in Werkstückkoordinaten geschriebenes Teileprogramm auf unterschiedlichen Werkzeugmaschinen ablaufen, sofern diese nur grundsätzlich in der Lage sind, alle gewünschten Werkzeugpositionen anzufahren.

Aufgabe der Erfindung ist es, ein Verfahren zum Positionieren von Maschinenachsen in Werkzeugmaschinen anzugeben, mit dem reproduzierbare Fehler in der Kinematik der Werkzeugmaschine auf besonders einfache Weise kompensiert werden können.

Diese Aufgabe wird gelöst durch ein Verfahren nach Anspruch 1. Vorteilhafte Details des Verfahrens ergeben sich aus den von Anspruch 1 abhängigen Ansprüchen.

Statt wie im Stand der Technik üblich mit einer auf die in Werkstückkoordinaten vorgegebenen Sollwerte wirkenden Kompensation mittels einer Kompensationstabelle wird die kinematische Kompensation der verschiedenen Achsfehler nun in der Kinematiktabelle einer Werkzeugmaschine vorgenommen.

Es wird ein Verfahren zum Positionieren von Maschinenachsen in Werkzeugmaschinen beschrieben, bei dem eine Numerische Steuerung anhand einer durch eine Kinematiktabelle definierten kinematischen Kette in Werkstückkoordinaten vorgegebene Sollpositionen eines Werkzeugs in Sollpositionen von Maschinenachsen umrechnet. Dabei sind in der Kinematiktabelle Transformationen der Koordinaten in mehreren, die Kinematik der Werkzeugmaschine beschreibenden Einträgen angegeben, indem pro Eintrag jeweils eine Achsrichtung und ein zugehöriger Transformationsbetrag angegeben ist. Das Verfahren zeichnet sich dadurch aus, dass für eine Maschinenachse mit einem Fehler in einer anderen Richtung als der jeweiligen Achsrichtung Fehlertransformationsbeträge in die Kinematiktabelle eingetragen werden, die von der Achsposition abhängig sind.

Die von der Achsposition abhängigen Fehlertransformationsbeträge liegen dabei in Form einer achsspezifischen Kompensationstabelle vor, die in der Kinematiktabelle referenziert wird. Eine solche Kompensationstabelle enthält dabei für mehrere Achspositionen Fehlertransformationsbeträge. Fehlertransformationsbeträge für Achspositionen zwischen den in der Kompensationstabelle enthaltenen Achspositionen werden bei Bedarf interpoliert.

Weitere Vorteile sowie Einzelheiten der vorliegenden Erfindung ergeben sich aus der nachfolgenden Beschreibung einer bevorzugten Ausführungsform anhand der Figuren. Dabei zeigt
- Figur 1: einen Ausschnitt einer Werkzeugmaschine in verschiedenen Ansichten,
- Figur 2: Beispiele für Kompensationstabellen und eine Kinematiktabelle.

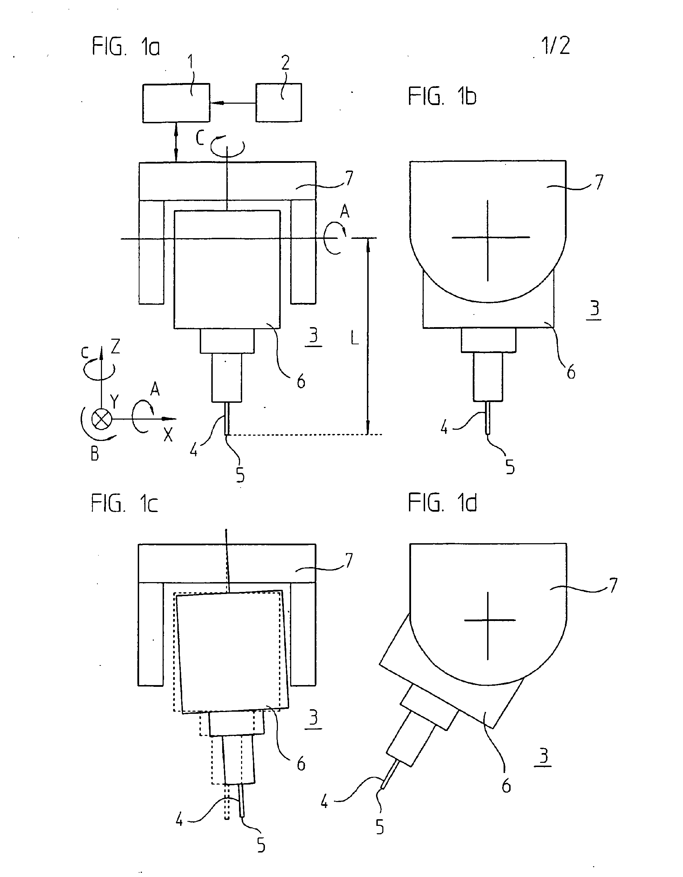

Anhand der Figur 1, die einen Ausschnitt einer Werkzeugmaschine in verschiedenen Ansichten und verschiedenen Zuständen zeigt, soll die Erfindung näher erläutert werden. Die Kinematik dieser Werkzeugmaschine ist selbstverständlich nur ein Beispiel, die Erfindung lässt sich ohne weiteres auch auf andere Kinematiken anwenden.

Eine Numerische Steuerung 1 mit einem in Werkstückkoordinaten geschriebenen NC-Programm 2 (diese Elemente sind nur in Figur 1a dargestellt, da dieser Teil der Figur 1 a in allen Ansichten unverändert wäre) dient zur Ansteuerung einer Werkzeugmaschine 3. Dabei soll der Tool Center Point 5 (TCP 5) eines Werkzeugs 4 auf einer vorgegebenen Bahn geführt und eine bestimmte Orientierung des Werkzeugs 4 eingehalten werden. Der TCP 5 kann beispielsweise der Kugelmittelpunkt eines Kugelfräsers oder der Mittelpunkt der Stirnseite eines Schaftfräsers sein.

Für dieses Beispiel sei angenommen, dass es sich bei der Werkzeugmaschine 3 um eine 5-Achs-Fräsmaschine, und damit beim Werkzeug 4 um einen Fräser 4 handelt. Dieser Fräser ist an einem Schwenkkopf 6 befestigt, der seinerseits mit zwei Lagern von einer Gabel 7 gehalten wird. Der Schwenkkopf ist damit um eine Achse A schwenkbar. Die Gabel 7 wiederum ist um eine Achse C drehbar gelagert, so dass in der Figur 1a zwei rotatorische Freiheitsgrade oder Maschinenachsen A, C dargestellt sind. Nicht dargestellt sind drei lineare Maschinenachsen X, Y, Z, die Translationen des Werkzeugs 4 ermöglichen. Die Werkzeugmaschine 3 verfügt also insgesamt über fünf Maschinenachsen X, Y, Z, A, C, deren Richtungen ebenfalls in der Figur 1 a zusammenfassend dargestellt sind.

Mit X, Y, Z, A und C sind hier sowohl die Maschinenachsen bezeichnet, als auch die zugehörigen Richtungen. Die jeweilige Bedeutung geht aus dem Kontext hervor. B bezeichnet nur eine Drehrichtung, da es wie weiter unten beschrieben in diesem Beispiel keine entsprechende Maschinenachse gibt.

Die Figur 1b stellt eine Seitenansicht der Figur 1 a dar. Die Figur 1c zeigt die selbe Ansicht wie Figur 1a, jedoch ist der Schwenkkopf 6 zusätzlich um die Maschinenachse A verkippt dargestellt, besser zu erkennen in der Seitenansicht der Figur 1d.

In der Figur 1c erkennt man, dass der Schwenkkopf 6 beim Schwenken um die Maschinenachse A nicht nur die eigentlich gewollte Bewegung ausführt, sondern zusätzlich eine Translation in Richtung der Maschinenachse X und eine Rotation in Richtung B (Eine Maschinenachse B gibt es in diesem Beispiel nicht, durch Fehler in der Mechanik tritt eine solche Rotation aber dennoch auf).

Es ist leicht einzusehen, dass der Betrag der unerwünschten Translation in X-Richtung und der unerwünschten Rotation in B-Richtung von der Winkelstellung der Maschinenachse A abhängt. Die Beziehung zwischen dem Schwenkwinkel der Maschinenachse A und den jeweiligen Translations- bzw. Rotationsbeträgen in X bzw. B ist dabei meist nicht linear.

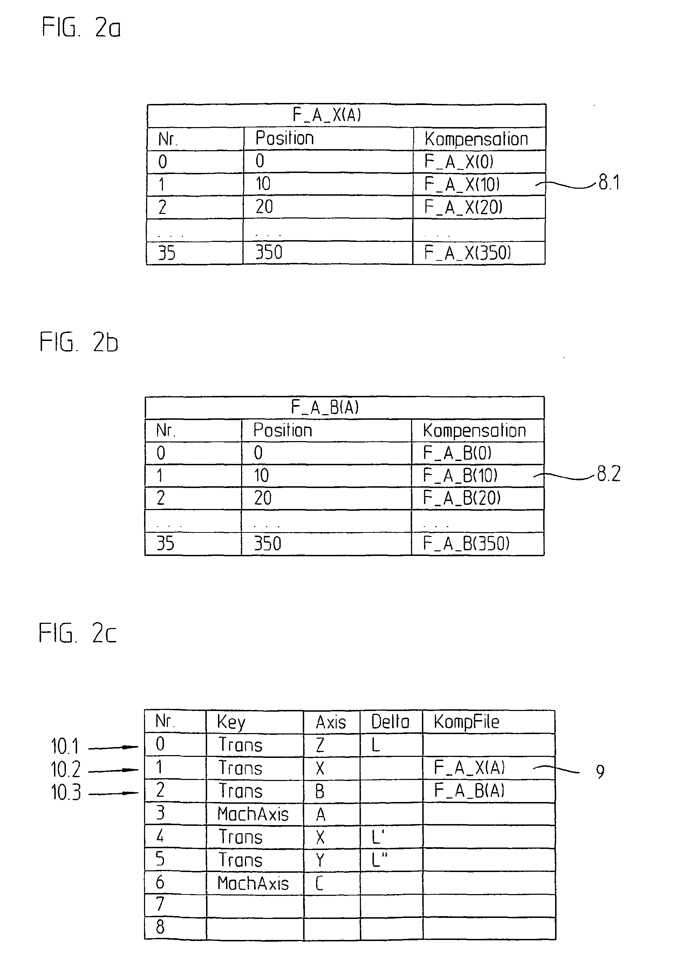

Die Figuren 2a und 2b zeigen Kompensationstabellen 8.1 bzw. 8.2, in denen jeweils der Fehler F_A_X(A), der beim Schwenken um die A-Achse in X-Richtung abhängig von der Stellung der Maschinenachse A auftritt, bzw. der Fehler F_A_B(A), der beim Schwenken um die A-Achse in B-Richtung abhängig von der Stellung der Maschinenachse A auftritt, für einige Stützpunkte (Winkelstellungen der Maschinenachse A) eingetragen ist.

An der Stelle von F_A_X(0) steht z.B. der Fehler, der in der 0-Grad Stellung der Maschinenachse A in der Richtung X auftritt, an der Stelle von F_A_B(20) steht der Fehler, der in der 20-Grad Stellung der Maschinenachse A in der Richtung B auftritt.

Die Stützpunkte sollten so nahe beieinander liegen, dass es sinnvoll ist, Zwischenwerte zu interpolieren. Die Stützpunkte selbst werden durch Messungen z.B. mit Tastern oder anderen Vergleichsmessmitteln erfasst. Die so erstellten Kompensationstabellen 8.1, 8.2 werden auf der Numerischen Steuerung 1 der Werkzeugmaschine 3 hinterlegt. Diese Erfassung der Kompensationstabellen 8.1, 8.2 muss vorteilhaft nur einmal z.B. vom Hersteller der Werkzeugmaschine vorgenommen werden und kann für alle NC-Programme 2 verwendet werden.

Figur 2c zeigt schließlich einen Ausschnitt der Kinematiktabelle 9 der Werkzeugmaschine 3. Die Kinematiktabelle 9 besteht aus mehreren Zeilen mit unterschiedlichen Einträgen. Die Art eines Eintrags ist nach der Zeilennummer in der ersten Spalte "Nr." in der zweiten Spalte "Key" festgelegt. "Trans" beschreibt dabei eine feste Koordinatentransformation innerhalb der kinematischen Kette, "MachAxis" einen durch eine Maschinenachse A, B, C, X, Y, Z vorhandenen Freiheitsgrad.

Die Kinematiktabelle 9 stellt also ausgehend vom TCP 5 eine Kinematik-Beschreibung der Werkzeugmaschine 3 in Form einer Transformationskette dar, bestehend aus festen Längen (Maschinenabmessungen), variablen Längen (Linear-Achsen), festen Drehungen (Maschinengegebenheiten) und variablen Drehungen (Dreh-Achsen).

Üblicherweise steht in jeder "Trans" - Zeile in der Spalte "Delta" der Betrag der Transformation, bzw. der Transformationsbetrag. Im Beispiel der Figur 2 wird die kinematische Kette der Werkzeugmaschine 3 der Figur 1 ausgehend vom TCP 5 des Werkzeugs 4 beschrieben. Wie man der Figur 1 entnehmen kann, muss zur Umrechung von Werkstückkoordinaten in Maschinenachskoordinaten zunächst ein Versatz in Z-Richtung um den Transformationsbetrag L berücksichtigt werden. Der erste Eintrag 10.1 in der Kinematiktabelle 9 lautet daher in Zeile 0: "Transformation in Z-Richtung um den Transformationsbetrag L". Dass der Versatz L üblicherweise aufgeteilt ist in eine variable Werkzeuglänge und eine feste Länge aus der Geometrie der Werkzeugmaschine 3 spielt hier keine Rolle. Die variable Länge des Werkzeugs 4 kann aus einer steuerungsintern abgelegten Werkzeugbeschreibungsdatei entnommen und zur festen Länge addiert werden, um L zu erhalten.

In einer idealen Werkzeugmaschine könnte der nächste Eintrag "MachAxis A" lauten, womit die auf den Versatz um den Transformationsbetrag L in Richtung Z folgende Maschinenachse A in der kinematischen Kette bzw. Kinematiktabelle 9 erfasst wäre. Bei der Durchführung der Koordinatentransformation muss an dieser Stelle die tatsächliche Winkelstellung der Maschinenachse A berücksichtigt werden.

Da diese Maschinenachse A wie in der Figur 1c dargestellt und oben beschrieben mit Fehlern behaftet ist, die zu weiteren Transformationen führen, enthält die Kinematiktabelle 9 noch zwei zusätzliche Einträge 10.2, 10.3 in den Zeilen 1 und 2:

Zeile 1 beschreibt eine weitere Transformation, diesmal in X-Richtung. Der Betrag dieser Transformation sei als Fehlertransformationsbetrag bezeichnet, da er eine auf einem Achsfehler beruhende Größe darstellt.

Dieser Fehlertransformationsbetrag ist in Zeile 1 in der Spalte "KompFile" eingetragen und referenziert die in Figur 2a dargestellte Kompensationstabelle F_A_X(A). Abhängig von der Winkelstellung (oder allgemeiner von der Achsposition) der Maschinenachse A können so unterschiedliche Fehlertransformationsbeträge in der Kinematiktabelle 9 und damit bei der Koordinatentransformation berücksichtigt werden.

Gleiches gilt für die Zeile 2, in der für den Fehler der Maschinenachse A von der Winkelstellung der Maschinenachse A abhängige Fehlertransformationsbeträge für die Richtung B erfasst sind, indem die Tabelle F_A_B(A) der Figur 2b referenziert wird.

In Zeile 3 ist nun die Maschinenachse A eingetragen. In der Kinematiktabelle 9 des vorliegenden Beispiels folgen dann zwei weitere Translationen in X um L' und in Y um L", bevor die nächste Maschinenachse C eingetragen ist. Falls auch die Maschinenachse C mit Fehlern behaftet ist, die in der Kinematiktabelle 9 berücksichtigt werden müssen, so sollten mit weiteren Zeilen die entsprechenden Translationen eingetragen werden, unter Verweis auf die entsprechenden Kompensationstabellen wie z.B. F_C_Z(C), also dem von der Winkelstellung in der Maschinenachse C abhängigen Fehler in Richtung Z.

Auf diese Weise kann die Kinematik einer beliebigen Werkzeugmaschine beschrieben werden, wobei auch fehlerbehaftete Linearachsen durch in die Kinematiktabelle eingetragene von der Achsposition abhängige Fehlertransformationsbeträge berücksichtigt werden können.

Das beschriebene Verfahren ermöglicht also eine besonders einfache Kompensation von fehlerbehafteten Maschinenachsen einer Werkzeugmaschine, und damit eine einfache Positionierung der Maschinenachsen so, dass das Werkzeug wie gefordert mit hoher Genauigkeit positioniert werden kann.

## Patentansprüche

1. Verfahren zum Positionieren von Maschinenachsen einer Werkzeugmaschine, gemäß dem eine Numerische Steuerung (1) anhand einer durch eine Kinematiktabelle (9) definierten kinematischen Kette in Werkstückkoordinaten vorgegebene Sollpositionen eines Werkzeugs (4) in Sollpositionen von Maschinenachsen (X, Y, Z, A, B, C) umrechnet, wobei in der Kinematiktabelle (9) Transformationen der Koordinaten in mehreren, die Kinematik der Werkzeugmaschine (3) beschreibenden Einträgen angegeben sind, indem pro Eintrag jeweils eine Achsrichtung (X, Y, Z, A, B, C) und ein zugehöriger Transformationsbetrag (L, L', L") angegeben ist, **dadurch gekennzeichnet, dass** für eine Maschinenachse (X, Y, Z, A, B, C) mit einem Fehler in einer anderen Richtung als der jeweiligen Achsrichtung von der Achsposition abhängige Fehlertransformationsbeträge (F_A_X(A), F_A_B(A)) in die Kinematiktabelle (9) eingetragen werden, wobei die von der Achsposition abhängigen Fehlertransformationsbeträge (F_A_X(A), F_A_B(A)) in Form einer achsspezifischen Kompensationstabelle (8.1, 8.2) vorliegen, die in der Kinematiktabelle (9) referenziert wird.

2. Verfahren nach Anspruch 1, **dadurch gekennzeichnet, dass** die Kompensationstabelle (8.1, 8.2) für mehrere Achspositionen Fehlertransformationsbeträge enthält.

3. Verfahren nach Anspruch 2, **dadurch gekennzeichnet, dass** für Achspositionen, für die die Kompensationstabelle (8.1, 8.2) keine Fehlertransformationsbeträge enthält, Fehlertransformationsbeträge interpoliert werden.

## Claims

1. A method for positioning machine axes of a machine tool according to which a numerical control (1) converts setpoint positions of a tool (4), which are preset in tool coordinates, into setpoint positions of machine axes (X, Y, Z, A, B, C) by means of a kinetmatic chain, which is defined by means of a kinematic table (9), wherein transformations of the coordinates are specified in the kinematic table (9) by a plurality of entries, which describe the kinetmatic of the tool machine (3), in that one axial direction (X, Y, Z, A, B, C) and a corresponding transformation value (L, L', L") is specified in each case for each entry, **characterized in that** error transformation values (F_A_X(A), F A B(A)), which depend on the axial position, are entered into the kinematic table (9) for a machine axis (X, Y, Z, A, B, C) comprising an error in a different direction than the respective axial direction, wherein the error transformation values (F A X(A), F_A_B(A)), which are dependent on the axial position, are present in the form of an axially specific compensation table (8.1, 8.2), which is referenced in the kinematic table (9).

2. The method according to claim 1, **characterized in that** the compensation table (8.1, 8.2) contains error transformation values for a plurality of axial positions.

3. The method according to claim 2, **characterized in that** error transformation values are interpolated for axial positions, for which the compensation table (8.1, 8.2) does not contain any error compensation values.

## Revendications

1. Procédé pour le positionnement d'axes de machine d'une machine-outil, selon lequel une commande numérique (1) transforme par calcul des positions théoriques d'un outil (4), prédéfinies par des coordonnées de pièce à usiner, en positions théoriques d'axes de machine (X, Y, Z, A, B, C), à l'aide d'une chaîne cinématique définie par un tableau cinématique, dans lequel des transformations des coordonnées en plusieurs entrées décrivant la cinématique de la machine-outil (3) sont indiquées dans le tableau cinématique (9), en fournissant respectivement une direction d'axe (X, Y, Z, A, B, C) et un montant de transformation (L, L', L") correspondant pour chaque entrée, **caractérisé en ce que** pour un axe de machine (X, Y, Z, A, B, C), des montants de transformation d'erreur (F_A_X(A), F_A_B(A)) dépendant de la position d'axe sont inscrits dans le tableau cinématique (9), avec une erreur dans une direction autre que la direction d'axe respective, où les montants de transformation d'erreur (F_A_X(A), F_A_B(A)) dépendants de la position d'axe sont présentés sous la forme d'un tableau de compensation (8.1, 8.2) spécifique à l'axe, qui est référencé dans le tableau cinématique (9).

2. Procédé selon la revendication 1, **caractérisé en ce que** le tableau de compensation (8.1, 8.2) contient des montants de transformation d'erreur pour plusieurs positions d'axe.

3. Procédé selon la revendication 2, **caractérisé en ce que** pour les positions d'axe pour lesquelles le tableau de compensation (8.1, 8.2) ne contient pas de montants de transformation d'erreur, les montants de transformation d'erreur sont interpolés.
